# EUROPEAN PATENT SPECIFICATION

(11) **EP 2 778 921 B1**
(45) Date of publication and mention of the grant of the patent: **22.07.2020**
(21) Application number: 14159724.5
(22) Date of filing: 14.03.2014
(51) Int. Cl.: G06F 9/50

(54) **A method and a system for distributed processing of a dataset**
Verfahren und System zur verteilten Verarbeitung eines Datensatzes
Procédé et système de traitement réparti d'un ensemble de données

(30) Priority: 14.03.2013 US 201361784830 P
(43) Date of publication of application: 17.09.2014
(73) Proprietor: Sitecore Corporation A/S, 1606 Copenhagen V (DK)
(72) Inventor: Kostenko, Dmytro, 1606 København V (DK)
(74) Representative: Inspicos P/S

(56) References cited:
- US-A1- 2005 015 546
- US-A1- 2009 157 776
- US-A1- 2012 246 158

## Description

### FIELD OF THE INVENTION

The present invention relates to a method and a system for distributing processing of a dataset among two or more workers. More particularly, the method and system of the invention ensure, in a dynamical manner, that all workers taking part in processing of the dataset at any time will have a sufficient number of data records to process, thereby ensuring that the potential processing capacity is utilized to the greatest possible extent.

### BACKGROUND OF THE INVENTION

When large datasets, i.e. datasets comprising a large number of data records, are processed, it may be desirable to use a distributed processing environment in which a number of workers operate in parallel in order to perform the processing task. To this end it is necessary to split the dataset into chunks, each chunk being assigned to a worker for processing, in order to avoid collision in the sense that two or more workers compete for access to the same data records. In some prior art methods this splitting of the dataset into chunks is performed initially by means of enumerating the dataset by a central dispatcher or service or by means of physically splitting the dataset up-front into a fixed number of chunks. In this case all workers must communicate with the central dispatcher or service during the processing of the dataset.

US 2011/0302151 A1 discloses a method for processing data. The method includes receiving a query for processing data. Upon receipt of a query, a query execution plan may be generated, whereby the query can be broken up into various partitions, parts and/or tasks, which can be further distributed across the nodes in a cluster for processing. Thus, the splitting of the dataset to be processed is performed up-front as described above.

US 2012/0182891 A1 discloses a packet analysis method, which enables cluster nodes to process in parallel a large quantity of packets collected in a network in an open source distribution system called Hadoop. Hadoop is a data processing platform that provides a base for fabricating and operating applications capable of processing several hundreds of gigabytes to terabytes or petabytes. The data is not stored in one computer, but split into several blocks and distributed into and stored in several computers. When a job is started at a request of a client, an input format determines how the input file will be split and read. Thus, the splitting of the dataset to be processed is performed up-front as described above.

US 2012/0246158 A1 discloses a co-range partitioning scheme that divides multiple static or dynamically generated datasets into balanced partitions using a common set of automatically computed range keys. A co-range partition manager minimizes the number of data partitioning operations for a multi-source operator by applying a co-range partition on a pair of its predecessor nodes as early as possible in the execution plan graph.

### DESCRIPTION OF THE INVENTION

It is an object of embodiments of the invention to provide a method for distributing processing of a dataset among two or more workers, in which splitting of the dataset into chunks is performed dynamically, and in a manner which allows the number of available workers to change.

In the following the term "embodiment" is to be understood as "example" unless it is directed to a combination of features entirely defined in the claims.

It is a further object of embodiments of the invention to provide a method for distributing processing of a dataset among two or more workers, in which splitting of the dataset into chunks can be performed without contacting a storage containing the dataset.

According to a first aspect the invention provides a method for distributing processing of a dataset among two or more workers according to claim 1.

The method according to the invention is a method for distributing processing of a dataset among two or more workers. Thus, when the method according to the invention is performed, two or more workers perform parallel processing of the dataset. Accordingly, the method of the invention is very suitable for processing large datasets, such as datasets comprising a large number of data records.

In the present context the term 'dataset' should be interpreted to mean a collection of data records which are stored centrally and in a manner which allows each of the workers to access the data records, e.g. in a database. Preferably, the number of data records in the dataset is very large, such as in the order of 1,000,000 to 100,000,000 data records. Each data record has a unique key which allows the data record to be identified, the keys may be interpreted as integer numbers which may be assumed to be random, and the records in the dataset are arranged in the order of increasing (or decreasing) key values. For instance, the keys may be GUID values, in which case the data records, or the keys, may be arranged in order of increasing number values when GUIDs are interpreted as numbers, with the data record having the lowest key arranged first and the data record having the highest key arranged last. As an alternative, the keys may be or comprise text strings, in which case the data records may be arranged in alphabetical order, and because text strings are normally encoded as number sequences, it is possible to interpret them as very large integer numbers arranged in increasing order. Alternatively, other kinds of keys allowing the data records to be arranged in an ordered manner may be envisaged.

For instance:
- Dataset defines a key function key = k(data record), where each data record has a unique key value.
- Database defines an ordering function "order = O(key)" where:
   ∘ Order is an integer
   ∘ Each key value corresponds to one and only one order value.
   ∘ For two keys i, j if O(i) < O(j) then record i precedes record j in the dataset.
   ∘ If for two records i,j O(j) = O(i) + 1 then there cannot exist a key k which could be inserted after key i but before key j.
- Then it is possible to define an equivalent ordering function "estimatedOrder = E(key)" and an inverse function "estimatedKey = I(estimatedOrder)" where:
   ∘ estimatedOrder is an integer, and estimatedKey is a key of a record in the dataset.
   ∘ Each key value corresponds to exactly one estimated order value.
   ∘ I(E(key)) = key, E(I(order)) = order
   ∘ For two keys i, j if E(i) < E(j) then record i precedes record j in the dataset.
   ∘ If for two records i,j E(j) = E(i) + 1 then there cannot exist a key k which could be inserted after key i but before key j. The pair of functions E() and I() provides a way to map keys or data records in the dataset to integer numbers, treat chunks of records as integer intervals and perform arithmetical operations such as addition, subtraction, division etc.

In the present context the term 'worker' should be interpreted to mean an execution process in a computer system running a program which is capable of performing processing tasks. Thus, a 'worker' should not be interpreted as a person.

In the method according to the invention continuous chunks of records in the dataset are represented as integer intervals, and the term 'chunk' refers to both the continuous chunk of records and to the corresponding integer intervals. The term 'split' refers to a mathematical operation performed on the integer intervals, where the corresponding chunks for the resulting intervals are then defined.

According to the method workers may encapsulate an implementation of functions E() and I() which allows them to estimate chunks of records in the dataset without contacting the database where the dataset is stored, but with a guarantee that estimated chunks do not overlap and do not have gaps.

In the method according to the invention the dataset is initially split into one or more chunks, corresponding to a number of workers which are ready to process the data records of the dataset. Each chunk comprises a plurality of data records, and each chunk is assigned to one of the workers. Thus, each of the workers is assigned a chunk, i.e. a part, of the dataset, and is allowed to process the data records of the chunk. Preferably, there is no overlap between the chunks, and each data record of the dataset forms part of a chunk. Thereby each of the data records is assigned to a worker for processing, and no data record is assigned to two or more workers. Thereby it is ensured that all data records will be processed, and that the workers will not be competing for the same data records, i.e. collisions are avoided.

In the case that only one worker is initially ready to process the data records of the dataset, the dataset will only be split into one chunk, i.e. the entire data set will be assigned to the worker. If two or more workers are initially ready to process the data records of the dataset, a suitable splitting of the dataset is performed, e.g. into chunks of substantially equal size, such as into chunks containing substantially equal numbers of data records.

Next, a further worker requests access to the dataset. In the present context the term 'further worker' should be interpreted to mean a worker which does not already have a chunk of the dataset assigned to it, i.e. a worker which is not yet performing processing of the data records of the dataset. However, the further worker is ready to perform processing of the data records of the dataset, and the capacity of the further worker should therefore be utilized in order to ensure efficient and fast processing of the dataset. Accordingly, a chunk of the dataset should be assigned to the further worker in order to allow it to perform processing of data records of the dataset, while avoiding collisions with the workers which are already performing processing of the data records of the dataset.

When the further worker has requested access to the dataset, the largest chunk among the chunk(s) assigned to the worker(s) already processing data records of the dataset is identified. The worker having the identified chunk assigned to it is then requested to split the chunk. It may be assumed that the largest chunk is also the chunk with the highest number of data records still needing to be processed. It is therefore an advantage to split this chunk in order to create a chunk for the further worker, since this will most likely result in the data records of the dataset being distributed among the available workers in a way which allows the available processing capacity of the workers to be utilized to the greatest possible extent.

The largest chunk may be identified in a number of suitable ways. This will be described in further detail below.

Once the largest chunk has been identified, the worker having the identified chunk assigned to it selects a split point and splits the identified chunk into two new chunks, at the selected split point. The worker assigns one of the new chunks to itself, and the other of the new chunks to the further worker. Thus, the worker which was already working on the data records of the identified chunk keeps a part of the identified chunk for itself and gives the rest of the identified chunk to the further worker. Thus, the data records of the identified chunk, which have not yet been processed, are divided, in a suitable manner, between the original worker and the further worker, thereby allowing the data records of the identified chunk to be processed faster and in an efficient manner.

Finally, all of the workers are allowed to process the data records of the chunks assigned to them.

Datasets stored in modern databases are normally addressed by unique keys (called "primary key") and use structures called "indexes" to facilitate searching and retrieving the records, where the key values in an index are arranged in (an increasing) order. The nature of the keys depends on the actual dataset, but it is safe to assume that the keys are similar to random integer numbers belonging to some finite range or interval, and the records in the dataset are arranged in the order of (increasing) the key value. This allows representing any continuous chunk of records in the dataset (including the dataset itself) as a number interval limited by some upper and lower bounds. When the dataset is very large (comprising of millions of records), it can also be assumed that the distribution of the keys over the number interval is approximately even. For example, keys in a dataset can be GUIDs which essentially are 128-bit integer numbers in an interval from 0 to 2¹²⁸-1, and the sequence of keys of a particular dataset would be a sequence of (monotonically increasing) presumably random integer numbers which are approximately evenly distributed over the interval [0, 2¹²⁸-1]

When multiple workers need to process a very large dataset, e.g. in a database, the problem of distributing work among the workers is essentially the problem of partitioning (splitting) the dataset into continuous chunks of records and allocating a chunk to each of the workers. Because the keys of the dataset can be represented as integer numbers, and the chunks of records can be represented as number intervals, it is possible to define a method of splitting number intervals to identify chunks of records to be processed by each of the workers, at the same time avoiding the necessity to enumerate the records in the dataset or contact the database where the dataset is located.

The simplicity of arithmetic operations allows performing partitioning operations ad-hoc, as new workers arrive, without having to necessarily compute or allocate chunks of records in advance. In the case that the resulting chunks are not completely accurate in a sense that some workers may finish processing earlier than the other workers, the process of splitting can be repeated for the un-processed portion of the dataset to redistribute remaining work among the available workers and maximize the utilization of resources.

It is an advantage that the worker having the identified chunk assigned to it is requested to split the chunk, and that the steps of selecting a split point and splitting the chunk are therefore performed by said worker, because thereby the splitting process is performed directly by the workers performing the processing of the data records of the dataset, and thereby there is no need to set up a complex centralized dispatcher or coordination service or for communicating with a storage where the dataset is located. Furthermore, the splitting can be performed dynamically, i.e. it can be ensured that at any time during the processing of the dataset, the data records of the dataset are distributed among the available workers in an optimal manner. For instance, the number of workers may change, and may therefore not be known up-front. The method of the invention allows the processing resources of all available workers, at a given time, to be utilized in an optimal manner. Accordingly, it is ensured that the available processing capacity is utilized to the greatest possible extent, thereby ensuring that the dataset is processed in an efficient manner, and in a manner which matches the number of available workers at any given time.

The steps described above may be repeated in the case that yet another worker requests access to the dataset.

As an example, the dataset may initially be split into, e.g., three chunks of substantially equal size, and the three chunks are respectively assigned to three workers, which are initially available for processing the dataset. When a further worker requests access to the dataset, the three original chunks are of approximately of the same size, but one of them is identified as the largest and split into two new chunks, as described above. The two new chunks will most likely be significantly smaller than the two original chunks, which were not split in response to the further worker requesting access to the dataset. When yet another worker requests access to the dataset, one of the two new chunks will most likely not be identified as the largest chunk. Instead, one of the original chunks will most likely be selected and split to form two new chunks. The dataset will then be divided into five chunks, and one of the chunks, i.e. the last of the original chunks, which has not yet been split, is most likely significantly larger than the other chunks. Accordingly, if yet another worker requests access to the dataset, this last chunk will most likely be identified as the largest chunk.

A set of arithmetic operations may be defined on the keys of the data records of the dataset. The arithmetic operations may be linked to the ordering of the keys in such a way that it is possible to define when two keys are equal to each other, when one key is greater than (or less than) another key, finding a median between two keys, incrementing or decrementing keys, i.e. defining a neighbouring key, etc.

The step of identifying the largest chunk may comprise assigning a numeric weight value to each chunk and identifying the chunk having highest assigned numeric weight as the largest chunk. The assigned numeric weight of a chunk may be an estimated number of data records in the chunk. In this case, the largest chunk is the chunk which comprises the highest estimated number of data records. As an alternative, other criteria may be used for identifying the largest chunk. For instance, each data record may be provided with a weight, and the weight value assigned to a chunk may be the sum of the weights of the data records of the chunk. Or an estimated number of un-processed data records in the chunks may be used as a basis for identifying the largest chunk. Or any other suitable criteria may be used.

The step of selecting a split point may be performed using a binary search method. According to this embodiment, the split point is selected in a dynamical way which takes into account prevailing circumstances, such as how many of the data records of the identified chunk have already been processed, and how many still need to be processed. Examples of binary search methods will be described in further detail below.

The step of selecting a split point may comprise the steps of:
- defining a left boundary, k_{left}, of the chunk as the key of the first data record of the chunk,
- defining a right boundary, k_{right}, of the chunk as the key of the last data record of the chunk,
- finding a first split point candidate, s₁, of the chunk as the median between the left boundary, k_{left}, and the right boundary, k_{right},
- identifying a current position of the worker having the chunk assigned to it, as a data record which is about to be processed by the worker,
- comparing the current position to the first split point candidate, s₁, and
- selecting a split point on the basis of the comparing step.

The left boundary, k_{left}, and/or the right boundary, k_{right}, of the chunk may be a split point of a chunk which was previously split in order to create new chunks, in the manner described above. In any event, the left boundary, k_{left}, and the right boundary, k_{right}, define the boundaries of the chunk which has been identified as the largest chunk, and which is about to be split. Thus, the identified chunk comprises the data record having the key, k_{left}, the data record having the key, k_{right}, and any data record having a key between these two in the ordered sequence of keys.

A first split point candidate, s₁, is found as the median between the left boundary, k_{left}, and the right boundary, k_{right}. Thus, the first split point candidate, s₁, is approximately 'in the middle' of the identified chunk, in the sense that the number of data records arranged between the left boundary, k_{left}, and the first split point candidate, s₁, is substantially equal to the number of data records arranged between the first split point candidate, s₁, and the right boundary, k_{right}. Thus, if no data records had yet been processed by the worker having the identified chunk assigned to it, splitting the chunk at the first split point candidate, s₁, would most likely result in the chunk being split in such a manner that the two workers are assigned substantially equal number of un-processed data records.

However, it must be assumed that the worker having the identified chunk assigned to it has already processed some of the data records, and therefore splitting the chunk at the first split point candidate, s₁, may not result in an optimal distribution of un-processed data records. In order to investigate whether or not this is the case, the current position of the worker having the identified chunk assigned to it is identified, as a data record which is about to be processed by the worker. Thus, the current position represents how much of the chunk the worker has already processed.

The current position is then compared to the first split point candidate, s₁, and a split point is selected on the basis of the comparing step. The comparison may reveal how close the worker is to having processed half of the data records of the identified chunk, and whether this has already been exceeded. This may provide a basis for determining whether or not the first split point candidate, s₁, is a suitable split point.

The method may further comprise the steps of:
- in the case that the current position is less than the first split point candidate, s₁, finding a first check position, c₁, of the chunk as the median between the left boundary, k_{left}, and the first split point candidate, s₁,
- comparing the current position to the first check position, c₁, and
- in the case that the current position is less than the first check position, c₁, selecting the first split point candidate, s₁, as a split point, and splitting the chunk at the selected split point.

If the comparing step reveals that the current position is less than the first split point candidate, s₁, then it can be assumed that the worker having the identified chunk assigned to it has not yet processed all of the data records up to the first split point candidate, s₁. However, the comparison will not necessarily reveal how close the current position is to the first split point candidate, s₁. If the current position is very close to the first split point candidate, s₁, then splitting the chunk at the first split point candidate, s₁, will result in an uneven distribution of the un-processed data records of the chunk among the two new chunks. Therefore the first split point candidate, s₁, would not be a suitable split point in this case. On the other hand, if the current position is far from the first split point candidate, s₁, then splitting the chunk at the first split point candidate, s₁, may very likely result in a suitable distribution of the remaining un-processed data records of the chunk among the two new chunks. Therefore, in this case the first split point candidate, s₁, may be a suitable split point.

Thus, in order to establish how close the current position is to the first split point candidate, s₁, a first check position, c₁, of the chunk is found as the median between the left boundary, k_{left}, and the first split point candidate, s₁, and the current position is compared to the first check position, c₁.

If the current position is less than the first check position, c₁, then it may be assumed that the current position is sufficiently far away from the first split point candidate, s₁. Therefore, in this case the first split point candidate, s₁, is selected as the split point, and the chunk is split at the selected split point, i.e. at the first split point candidate, s₁.

The method may further comprise the steps of:
- in the case that the current position is greater than or equal to the first check position, c₁, finding a second split point candidate, s₂, of the chunk as the median between the first split point candidate, s₁, and the right boundary, k_{right}, and
- selecting the second split point candidate, s₂, as the split point, and splitting the chunk at the selected split point.

If the comparison of the current position and the first check position, c₁, reveals that the current position is greater than or equal to the first check position, c₁, then it may be assumed that the current position is too close to the first split point candidate, s₁, and the first split point candidate, s₁, is therefore probably not a suitable split point. Instead a split point is needed, which is greater than the first split point candidate, s₁. Therefore, in this case a second split point candidate, s₂, of the chunk is found as the median between the first split point candidate, s₁, and the right boundary, k_{right}. Since the current position is less than the first split point candidate, s₁, it can be assumed that it is sufficiently far away from the second split point candidate, s₂. Therefore, the second split point candidate, s₂, is most likely a suitable split point, and the second split point candidate, s₂, is therefore selected as the split point.

The method may further comprise the steps of:
- in the case that the current position is greater than or equal to the first split point candidate, s₁, finding a second split point candidate, s₂, of the chunk as the median between the first split point candidate, s₁, and the right boundary, k_{right}, and
- comparing the current position to the second split point candidate, s₂.

If the comparison between the current position and the first split point candidate, s₁, reveals that the current position is greater than or equal to the first split point candidate, s₁, then the worker having the identified chunk assigned to it has already processed all of the data records arranged before the first split point candidate, s₁, and possibly also some of the data records arranged after the first split point candidate, s₁. This makes the first split point candidate, s₁, unsuitable as the split point. Instead a split point is needed which is greater than the first split point candidate, s₁.

Therefore, a second split point candidate, s₂, is found as the median between the first split point candidate, s₁, and the right boundary, k_{right}, and the current position is compared to the second split point candidate, s₂, in order to determine whether or not the worker having the identified chunk assigned to it has already processed all of the data records arranged before the second split point candidate, s₂, similar to the situation described above with respect to the first split point candidate, s₁.

The method may further comprise the steps of:
- in the case that the current position is less than the second split point candidate, s₂, finding a second check position, c₂, of the chunk as the median between the first split point candidate, s₁, and the second split point candidate, s₂,
- comparing the current position to the second check position, c₂, and
- in the case that the current position is less than the second check position, c₂, selecting the second split point candidate, s₂, as the split point, and splitting the chunk at the selected split point.

If the comparison between the current position and the second split point candidate, s₂, reveals that the current position is less than the second split point candidate, s₂, then the worker having the identified chunk assigned to it has not yet processed all of the data records arranged before the second split point candidate, s₂. Therefore it is necessary to investigate how close the current position is the second split point candidate, s₂, in order to determine whether or not the second split point candidate, s₂, is a suitable split point, similar to the situation described above with respect to the first split point candidate, s₁.

In order to investigate this, a second check position, c₂, of the chunk is found as the median between the first split point candidate, s₁, and the second split point candidate, s₂, and the current position is compared to the second check position, c₂.

If the current position is less than the second check position, c₂, then it can be assumed that the current position is sufficiently far away from the second split point candidate, s₂, and the second split point candidate, s₂, is therefore selected as the split point.

The method may further comprise the steps of:
- in the case that the current position is greater than or equal to the second check position, c₂, finding a third split point candidate, s₃, as the median between the second split point candidate, s₂, and the right boundary, k_{right}, and
- selecting the third split point candidate, s₃, as the split point, and splitting the chunk at the selected split point.

If the comparison between the current position and the second check position, c₂, reveals that the current position is greater than or equal to the second check position, c₂, then the current position is most likely too close to the second split point candidate, s₂, and the second split point candidate, s₂, is therefore not a suitable split point. Instead a split point which is greater than the second split point candidate, s₂, is needed, and therefore a third split point candidate, s₃, is found as the median between the second split point candidate, s₂, and the right boundary, k_{right}. Since the current position is less than the second split point candidate, s₂, it may be assumed that the current position is sufficiently far from the third split point candidate, s₃, and third split point candidate, s₃, is therefore selected as the split point.

The method may further comprise the steps of:
- in the case that the current position is greater than or equal to the second split point candidate, s₂, continuing to find further split point candidates as the median between the latest split point candidate and the right boundary, k_{right}, until a suitable split point candidate has been identified, and
- selecting the identified suitable split point candidate as the split point, and splitting the chunk at the selected split point.

If the comparison between the current position and the second split point candidate, s₂, reveals that the current position is greater than or equal to the second split point candidate, s₂, then the worker having the identified chunk assigned to it has already processed all of the data records arranged before the second split point candidate, s₂, and possibly also some of the data records arranged after the second split point candidate, s₂. This makes the second split point candidate, s₂, unsuitable as a split point, and a split point which is greater than the second split point candidate, s₂, is required. Therefore, in this case a further split point candidate is found, essentially as described above, and the process is repeated until a suitable split point candidate has been identified. As described above, 'suitable split point candidate' should be interpreted to mean a split point candidate which is greater than the current position, and where the current position is sufficiently far away from the split point candidate to ensure that the distribution of un-processed data records between the two new chunks resulting from a split of the chunk at the split point candidate will be substantially even. Thus, the process of identifying a suitable split point candidate may be regarded as an iterative process.

When a suitable split point candidate has been identified in this manner, the identified split point candidate is selected as the split point, and the chunk is split at the selected split point.

According to one embodiment, the step of selecting a split point may comprise the steps of:
- defining a left boundary, k_{left}, of the chunk as the key of the first data record of the chunk, and identifying k_{left} as an initial split point candidate, s₀,
- defining a right boundary, k_{right}, of the chunk as the key of the last data record of the chunk,
- identifying a current position of the worker having the chunk assigned to it, as the data record which is about to be processed by the worker,
- iteratively performing the steps of:
   - finding a new split point candidate, sᵢ, as the median between the current split point candidate, sᵢ₋₁, and the right boundary, k_{right},
   - comparing the current position to the new split point candidate, sᵢ, and
   - use the new split point candidate, sᵢ, as the current split point candidate on the next iteration,
- until the current split point candidate, sᵢ, is greater than the current position.

According to this embodiment, the process of selecting a split point is an iterative process, essentially as described above. Thus, split point candidates are repeatedly found until the current split point candidate, sᵢ, is suitable in the sense that it is greater than the current position, i.e. until it is established that the worker having the identified chunk assigned to it has not yet processed all of the data records arranged before the current split point candidate, sᵢ.

The method may further comprise the steps of:
- when the current split point candidate, sᵢ, is greater than the current position, finding a check position, cᵢ, as the median between the previous split point candidate, sᵢ₋₁, and the current split point candidate, sᵢ,
- comparing the current position to the check position, cᵢ,
- in the case that the check position, cᵢ, is greater than or equal to the current position, selecting the current split point candidate, sᵢ, as the split point,
- in the case that the check position, cᵢ, is less than the current position, finding a new split point candidate, sᵢ₊₁, as the median between the current split point candidate, sᵢ, and the right boundary, k_{right}, and selecting the new split point candidate, sᵢ₊₁, as the split point.

According to this embodiment, once it has been established that the current split point candidate, sᵢ, is suitable in the sense that it is greater than the current position, it is investigated whether or not the current position is sufficiently far away from the current split point candidate, sᵢ, to make the current split point candidate, sᵢ, a suitable split point. To this end a check position, cᵢ, is found in the manner described above, and the current position is compared to the check position, cᵢ. If the check position, cᵢ, is greater than the current position, it may be assumed that the current position is sufficiently far away from the current split point candidate, sᵢ, and the current split point candidate, sᵢ, is therefore selected as the split point. On the other hand, if the check position, cᵢ, is less than the current position, the current position is too close to the current split point, sᵢ, and a new split point candidate, sᵢ₊₁, is therefore found as the median between the current split point candidate, sᵢ, and the right boundary, k_{right}. Since the current position is less than the current split point candidate, sᵢ, it may be assumed that the current position is sufficiently far away from the new split point candidate, sᵢ₊₁, and the new split point candidate, sᵢ₊₁, is therefore selected as the split point.

The step of splitting the identified chunk may comprise the steps of:
- creating a first new chunk from a left boundary, k_{left}, of the identified chunk to the selected split point, the left boundary, k_{left}, being the key of the first data record of the identified chunk, and
- creating a second new chunk from the selected split point to a right boundary, k_{right}, of the identified chunk, the right boundary, k_{right}, being the key of the last data record of the identified chunk,
wherein the first new chunk is assigned to the worker having the identified chunk assigned to it, and the second new chunk is assigned to the further worker.

According to this embodiment, the identified chunk is split in such a manner that the split point forms a right boundary of the first new chunk and a left boundary of the second new chunk. The current position, i.e. the position of the worker having the identified chunk assigned to it, will be contained in the first new chunk. Since the first new chunk is assigned to this worker, the worker simply continues processing data records from the current position when the split has been performed, working its way towards the split point which forms the right boundary of the first new chunk. The further worker, having the second new chunk assigned to it, starts processing data records from the split point, forming the left boundary of the second new chunk, working its way towards the right boundary of the identified chunk, which also forms the right boundary of the second new chunk.

The method may further comprise the steps of:
- estimating the sizes of the new chunks, and
- refraining from splitting the chunk if the size of at least one of the new chunks is smaller than a predefined threshold value.

If the worker having the identified chunk assigned to it has already processed so many of the data records in the chunk that two new chunks resulting from a split would be so small that it doesn't make sense to split the chunk, the worker may refrain from splitting the chunk and instead simply perform the processing of the remaining data records itself.

The size of a chunk may, e.g., be estimated in the following manner. If only one worker is processing data records of the dataset, and the entire dataset has therefore been assigned to that worker as one chunk, the estimated size of the chunk is the size of the dataset. An accurate measure or an estimate for this size may, e.g., be obtained from an external database where the dataset is stored.

When a chunk is split, e.g. in the manner described above, where split point candidates are iteratively found, an estimated size corresponding to a first split point candidate could be calculated as half the estimated size of the chunk being split. An estimated size corresponding a subsequent split point candidate could be calculated as half the estimated size corresponding to the immediately previous split point candidate. Thus, the estimated size corresponding to the second split point candidate would be half the estimated size corresponding to the first split point candidate, i.e. ¼ of the estimated size of the chunk being split. When a chunk is split, the new chunks are each assigned the size calculated in this manner, and the assigned sizes are used as basis for estimating sizes when a split of one of the new chunks is requested.

The method may further comprise the step of each worker continuously updating its current position while processing data records. According to this embodiment, each worker will always 'know' its current position. This makes it easy for a worker to compare its current position to a split point candidate or a check position, as described above.

The method may further comprise the step of defining a mapping between keys of the data records and numerical values, and the step of selecting a split point may comprise the steps of:
- defining a left boundary, k_{left}, of the chunk as the key of the first data record of the chunk, defining a right boundary, k_{right}, of the chunk as the key of the last data record of the chunk, and identifying a current position, k_{current}, of the worker having the identified chunk assigned to it, as a data record which is about to be processed by the worker,
- defining numerical values, N_{left}, N_{right}, and N_{current}, corresponding to the left boundary, k_{left}, the right boundary, k_{right}, and the current position, k_{current}, respectively, using the mapping between keys of the data records and numerical values,
- performing a binary search, using said numerical values, thereby finding a split point, s, which is substantially equally distant from N_{current} and N_{right}
- defining a split key, kₛₚₗᵢₜ, corresponding to the split point, s, using the reverse of the mapping between keys of the data records and numerical values.

According to this embodiment, a mapping between keys and numerical values, as well as a reverse mapping between numerical values and keys, is defined. For instance, F(key)=number and G(number)=key, where G is the reverse mapping of F, and vice versa. When the keys, k_{left}, k_{right}, and k_{current} have been found, the mapping (F) is applied in order to find the corresponding numerical values N_{left}, N_{right} and N_{current}. Since the keys are now represented by numerical values, it is possible to perform arithmetic operation on the numerical values. Accordingly, a binary search can be performed in order to find a numerical value representation of a suitable split point, s. Finally, the reverse mapping (G) is applied in order to find the split key, kₛₚₗᵢₜ, which corresponds to the split point, s, which was found during the binary search. The chunk is then split at the split key, kₛₚₗᵢₜ.

According to a second aspect, the invention provides a system for distributing processing of a dataset among two or more workers according to claim 16.

The system according to the second aspect of the invention is a system for performing the method according to the first aspect of the invention. Accordingly, the remarks set forth above with respect to the first aspect of the invention are equally applicable here.

The synchronization channel may comprise a shared memory structure. The shared memory structure may, e.g., comprise local memory of the workers. Alternatively or additionally, the synchronization channel may comprise a synchronization database, e.g. a centrally positioned database. Alternatively or additionally, the synchronization channel may comprise one or more network connections between the workers. According to this embodiment, the workers may communicate directly with each other in order to synchronize the processing of the data set.

### BRIEF DESCRIPTION OF THE DRAWINGS

The invention will now be described with reference to the accompanying drawings in which
Fig. 1 is a flow diagram illustrating a method according to an embodiment of the invention,
Figs. 2-5 illustrate an iterative process of finding a split point of a chunk in accordance with an embodiment of the invention,
Fig. 6 is a diagrammatic view of a system according to a first embodiment of the invention, and
Fig. 7 is a diagrammatic view of a system according to a second embodiment of the invention.

### DETAILED DESCRIPTION OF THE DRAWINGS

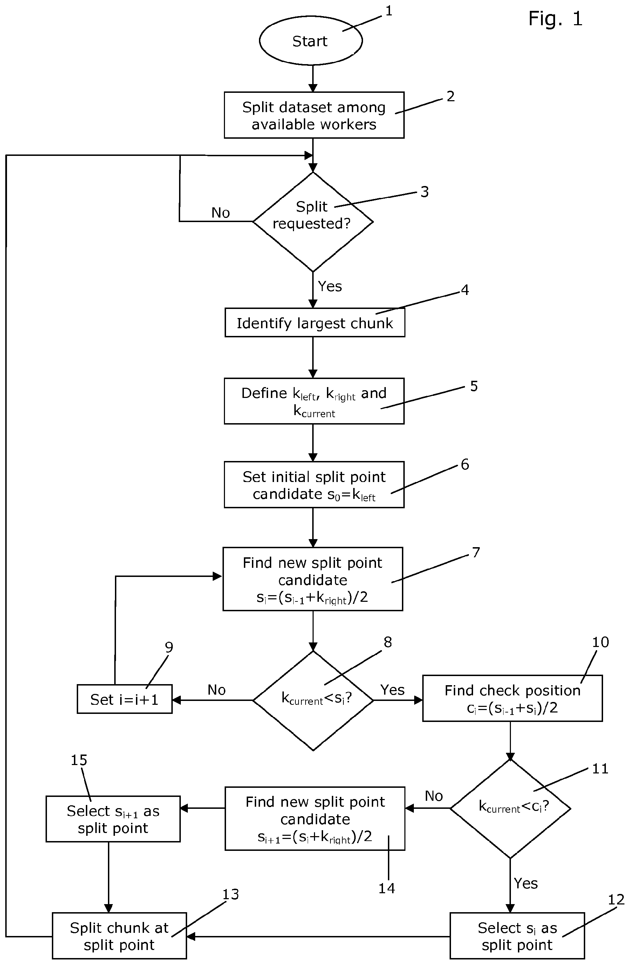

Fig. 1 is a flow diagram illustrating a method according to an embodiment of the invention. The process is started at step 1. At step 2 a dataset comprising a number of data records is split into one or more chunks, corresponding to a number of available workers being ready to process date records of the dataset. Each chunk is assigned to a worker. In the case that only one worker is available, the entire dataset is assigned to that worker. In the case that two or more workers are available, the dataset is split into chunks in an appropriate manner, e.g. into chunks of substantially equal size, and in such a manner that each data record of the dataset forms part of a chunk, and is thereby assigned to a worker. The workers then start processing the data records of the chunk assigned to them.

At step 3 it is investigated whether or not a split of a chunk has been requested. This occurs if a further worker becomes ready to process data records of the dataset, and therefore requests a chunk in order to start processing data records and increase the combined processing capacity working on the dataset.

In the case that step 3 reveals that no split has been requested, the process is returned to step 3 for continued monitoring for a split request.

In the case that step 3 reveals that a split has been requested, the process is forwarded to step 4, where the largest chunk among the chunks which have already been assigned to a worker, is identified. The largest chunk may, e.g., be the chunk having the highest number of estimated data records. It is advantageous that the largest chunk is split in order to provide a chunk for the further worker, since it may thereby be ensured that the un-processed data records are distributed among the available workers in such a manner that the available processing capacity is utilized to the greatest possible extent.

When the largest chunk has been identified, at step 4, the worker having the identified chunk is requested to split the chunk in order to provide a chunk for the further worker, while keeping a part of the original chunk for itself. To this end the worker starts a process of finding an appropriate split point of the chunk. At step 5 a left boundary, k_{left}, of the chunk, a right boundary, k_{right}, of the chunk, and a current position, k_{current}, of the worker are identified. The left boundary, k_{left}, is the key of the first data record of the chunk, and the right boundary, k_{right}, is the key of the last data record of the chunk. Thus, the left boundary, k_{left}, represents the start of the chunk, and the right boundary, k_{right}, represents the end of the chunk. The current position, k_{current}, is the key of the data record which is about to be processed by the worker. Thus, the current position, k_{current}, represents how much of the chunk the worker has already processed.

At step 6 the left boundary, k_{left}, is set as an initial split point candidate, i.e. s₀=k_{left}. Splitting the chunk at this initial split point candidate would result in the chunk actually not being split, and the initial split point candidate, s₀, is therefore not appropriate, and is only set in order to start the iterative process described below.

At step 7 a new split point candidate, sᵢ, is found as sᵢ=(sᵢ₋₁+k_{right})/2. Thus, the new split point candidate, sᵢ, is the median between the current split point candidate, sᵢ₋₁, and the right boundary, k_{right}. Since the initial split point candidate, s₀, is the left boundary, k_{left}, the first split point candidate, s₁, is calculated as s₁=(s₀+k_{right})/2=(k_{left}+k_{right})/2, i.e. it is the median of the chunk.

Next, at step 8 the current position, k_{current}, is compared to the calculated split point candidate, sᵢ. In the case that the comparison reveals that k_{current} is greater than or equal to the split point candidate, sᵢ, then the data record corresponding to the split point candidate, sᵢ, has already been processed by the worker. Therefore the split point candidate, sᵢ, is not an appropriate split point. Instead a split point which is greater than the current split point candidate, sᵢ, must be found. Therefore the process is forwarded to step 9, where i is incremented, and the process is returned to step 7 in order to find a new split point candidate as the median between the current split point candidate and the right boundary, k_{right}.

If the comparison of step 8 reveals that k_{current} is less than the split point candidate, sᵢ, then the worker has not yet processed the data record corresponding to the split point candidate, sᵢ, and sᵢ may therefore be a suitable split point. In order to investigate whether or not this is the case, the process is forwarded to step 10, where a check position, cᵢ, is found as the median between the previous split point candidate and the current split point candidate, i.e. as cᵢ=(sᵢ₋₁+sᵢ)/2.

At step 11 the current position, k_{current}, is compared to the check position, cᵢ, which was found at step 10. In the case that the comparison reveals that the current position is less than the check position, cᵢ, i.e. if k_{current}<cᵢ, then the current position, k_{current}, is sufficiently far away from the current split point candidate, sᵢ, to make sᵢ a suitable split point. Therefore, in this case the process is forwarded to step 12, where sᵢ is selected as split point. Finally, the chunk is split at the selected split point, at step 13.

If the comparison of step 11 reveals that the current position, k_{current}, is greater than or equal to the check position, cᵢ, then the current position, k_{current}, is probably too close to the current split point candidate, sᵢ, to make sᵢ a suitable split point. Instead a new split point must be found, which is greater than the current split point candidate, sᵢ. Therefore the process is, in this case, forwarded to step 14, where a new split point candidate, sᵢ₊₁, is found as in step 7, i.e. sᵢ₊₁=(sᵢ+k_{right})/2. The new split point candidate, sᵢ₊₁, is then selected as split point at step 15, and the process is subsequently forwarded to step 13, where the chunk is split at the selected split point.

When the chunk has been split at the selected split point, two new chunks have been provided, where the split point forms the right boundary of one of the chunks and the left boundary of the other chunk. The chunk where the current position, k_{current}, is arranged is then assigned to the worker having the original chunk assigned to it, and the other chunk is assigned to the further worker. The two workers then start processing the data records of the chunk assigned to them. Then the process is returned to step 3 in order to monitor whether further workers request access to the dataset.

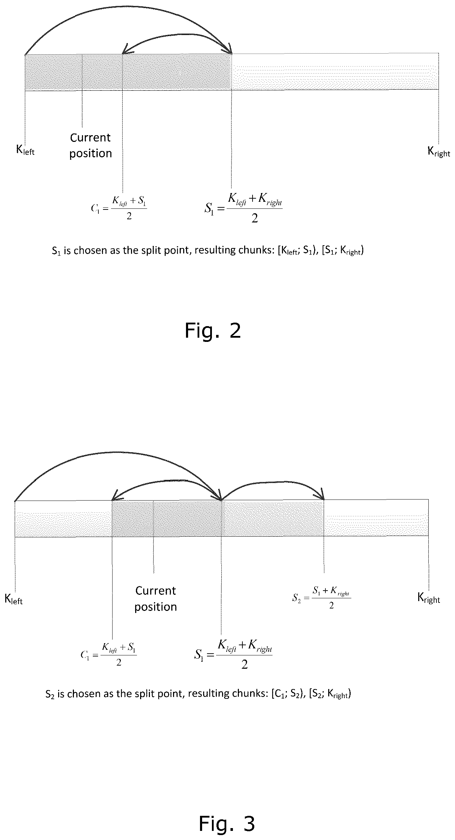

Figs. 2-5 illustrate an iterative process of finding a split point of a chunk in accordance with an embodiment of the invention. The process may, e.g., form part of the process described above with reference to Fig. 1.

Fig. 2 illustrates a chunk which has been identified as the largest chunk of a dataset, in response to a further worker requesting access to the dataset. Therefore, the worker having the chunk assigned to it has been requested to split the chunk.

A left boundary, k_{left}, of the chunk and a right boundary, k_{right}, of the chunk are shown in Fig. 2, representing the start and the end of the chunk, respectively. Furthermore, the current position of the worker having the chunk assigned to it is shown.

A first split point candidate, s₁, has been found as the median between the left boundary, k_{left}, and the right boundary, k_{right}, i.e. as s₁=(k_{left}+k_{right})/2. It can be seen from Fig. 2 that the current position is less than the first split point candidate, s₁. Thereby s₁ could potentially be a suitable split point, splitting the chunk into two new chunks, each comprising a sufficient number of un-processed data records to allow the processing capacity of the original worker as well as the new worker to be utilized in an efficient manner. However, this is only the case if the current position is not too close to the first split point candidate, s₁.

In order to establish whether or not the current position is too close to s₁, a first check position, c₁, has been found as the median between the left boundary, k_{left}, and the first split point candidate, s₁, i.e. as c₁=(k_{left}+s₁)/2. It can be seen from Fig. 2 that the current position is less than the first check position, c₁. Therefore it can be concluded that the current position is sufficiently far away from s₁ to make it a suitable split point. Therefore, in the case illustrated in Fig. 2, the first split point candidate, s₁, is selected as the split point. The resulting two new chunks are [k_{left}; s₁) and [s₁; k_{right}), respectively.

Fig. 3 also illustrates a chunk which has been identified as the largest chunk of a dataset, and the worker having the chunk assigned to it has been requested to split the chunk. Similarly to the chunk of Fig. 2, in Fig. 3 the left boundary, k_{left}, of the chunk, the right boundary, k_{right}, of the chunk, and the current position are shown. Furthermore, a first split point candidate, s₁, has been found in the manner described above with reference to Fig. 2.

In Fig. 3, the current position is also less than the first split point candidate, s₁, and therefore a first check position, c₁, has been found in the manner described above with reference to Fig. 2. However, in Fig. 3 the current position is greater than the first check position, c₁. It is therefore concluded that the current position is too close to the first split point candidate, s₁, and that a split point which is greater than the first split point candidate, s₁, is needed.

Therefore a second split point candidate, s₂, is found as the median between the first split point candidate, s₁, and the right boundary, k_{right}, i.e. as s₂=(s₁+k_{right})/2. Since the current position is less than the first split point candidate, s₁, it is concluded that the current position is sufficiently far away from the second split point candidate, s₂, to make it a suitable split point. Accordingly, the second split point candidate, s₂, is selected as the split point. The resulting two new chunks are [c₁; s₂) and [s₂; k_{right}), respectively.

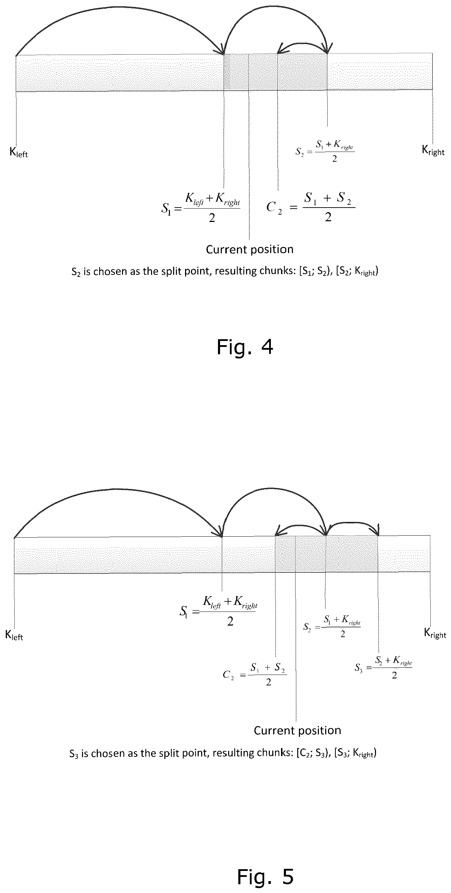

Fig. 4 also illustrates a chunk which has been identified as the largest chunk of a dataset, and the worker having the chunk assigned to it has been requested to split the chunk. A left boundary, k_{left}, of the chunk, a right boundary, k_{right}, of the chunk, and the current position are shown. Furthermore, a first split point candidate, s₁, has been found in the manner described above with reference to Fig. 2.

However, in Fig. 4 the current position is greater than the first split point candidate, s₁. Accordingly, all of the data records arranged before the first split point candidate, s₁, as well as some of the data records arranged after the first split point candidate, s₁, have already been processed by the worker having the chunk assigned to it. Therefore the first split point candidate, s₁, is not a suitable split point, and a split point which is greater than the first split point candidate, s₁, is needed.

Therefore a second split point candidate, s₂, has been found as the median between the first split point candidate, s₁, and the right boundary, k_{right}, i.e. as s₂=(s₁+k_{right})/2. In Fig. 4, the current position is less than the second split point candidate, s₂, and the second split point candidate, s₂, may therefore be a suitable split point, if the current position is not too close to the second split point candidate, s₂.

In order to establish whether or not the current position is too close to the second split point candidate, s₂, a second check position, c₂, has been calculated as the median between the first split point candidate, s₁, and the second split point candidate, s₂, i.e. as c₂=(s₁+s₂)/2.

In Fig. 4 the current position is less than the second check position, c₂. Therefore it is concluded that the current position is sufficiently far away from the second split point candidate, s₂, to make it a suitable split point, and the second split point candidate, s₂, is selected as the split point. The resulting two new chunks are [s₁; s₂) and [s₂; k_{right}), respectively.

Fig. 5 also illustrates a chunk which has been identified as the largest chunk of a dataset, and the worker having the chunk assigned to it has been requested to split the chunk. A left boundary, k_{left}, of the chunk, a right boundary, k_{right}, of the chunk and the current position are shown. A first split point candidate, s₁, has been found in the manner described above with reference to Fig. 2. The current position is greater than the first split point candidate, s₁, and therefore a second split point candidate, s₂, has been found in the manner described above with reference to Fig. 4. The current position is less than the second split point candidate, s₂, and therefore a second check position, c₂, has been found in the manner described above with reference to Fig. 4, in order to establish whether or not the current position is too close to the second split point candidate, s₂.

However, in Fig. 5 the current position is greater than the second check position, c₂, and it is therefore concluded that the current position is too close to the second split point candidate, s₂, to make it a suitable split point, and that a split point which is greater than the second split point candidate, s₂, is needed.

Therefore a third split point candidate, s₃, has been found as the median between the second split point candidate, s₂, and the right boundary, k_{right}, i.e. as s₃=(s₂+k_{right})/2. Since the current position is less than the second split point position, s₂, it is concluded that it is sufficiently far away from the third split point candidate, s₃, and therefore the third split point candidate, s₃, is selected as the split point. The resulting two new chunks are [c₂; s₃) and [s₃; k_{right}), respectively.

The process illustrated by Figs. 2-5 is an iterative process, where new split point candidates are found until a suitable split point has been identified in the sense that the current position is less than the split point candidate and the current position is sufficiently far away from the split point candidate. It should be noted that the process may be continued to find a fourth, fifth, sixth, etc., split point candidate until the current split point candidate can be considered as suitable.

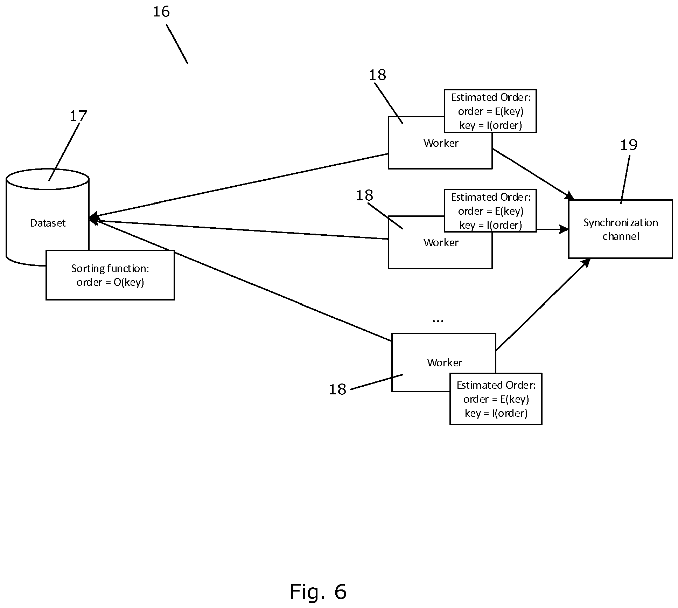

Fig. 6 is a diagrammatic view of a system 16 according to a first embodiment of the invention. The system 16 comprises a database 17 containing a dataset to be processed, and a plurality of workers 18, three of which are shown. Each of the workers 18 is capable of performing the method described above, and each of the workers 18 is capable of processing data records.

Each of the workers 18 is capable of communicating with the database 17 in order to receive chunks of data records for processing from the database 17, and in order to return processed data records to the database 17.

Initially, the dataset is divided into a number of chunks corresponding to the number of available workers 18 at that specific time. The chunks may advantageously be of substantially equal size, and the chunks are distributed among the available workers 18 for processing.

Each data record of the dataset has a unique key value, and is defined by a key function key, key=k(data record). The dataset, stored in the database 17, defines an ordering function, order=O(key), where "order" is an integer, and each key value corresponds to one and only one order value. Thus, for two keys, i and j, if O(i)<O(j), then record i precedes record j in the dataset. If, for two records, i and j, O(j)=O(i)+1, then there cannot exist a key, k, which could be inserted between the keys i and j, i.e. after key i, but before key j.

Each of the workers 18 defines an equivalent ordering function, estimatedOrder=E(key), and a corresponding inverse function, estimatedKey=I(estimatedOrder). "estimatedOrder" is an integer, and "estimatedKey" is a key of a record in the dataset. Each key value corresponds exactly to one estimated order value. Thus, I(E(key))=key, and E(I(order))=order. Thus, the pair of functions, E() and I(), provides a way to map keys or data records in the dataset to integer numbers, treat chunks of records as number ranges or intervals, and perform arithmetical operations such as addition, subtraction, division etc.

Each of the workers 18 is further capable of communicating with a synchronization channel 19. This allows the workers 18 to coordinate the processing of the data records of the dataset, including distributing chunks of data records among them, in accordance with the method described above. The synchronization channel may, e.g., be or include a shared memory structure, a synchronization database or a network connection between the workers 18.

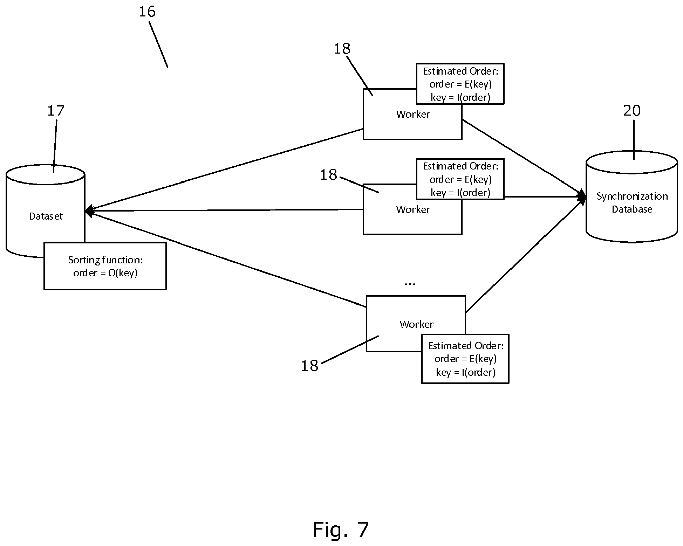

Fig. 7 is a diagrammatic view of a system 16 according to a second embodiment of the invention. The system 16 of Fig. 7 is very similar to the system 16 of Fig. 6, and it will therefore not be described in further detail here. In Fig. 7, the synchronization channel is in the form of a synchronization database 20, which each of the workers 18 can access.

## Claims

1. A method for distributing processing of a dataset among two or more workers, said dataset comprising a number of data records, each data record having a unique key, the keys being represented as integer numbers, the data records being arranged in the order of increasing or decreasing key values, the method comprising the steps of:
- splitting the dataset into one or more continuous chunks, each chunk comprising a plurality of data records, and assigning each chunk of the dataset to a worker, and allowing each of the worker(s) to process the data records of the chunk assigned to it, the worker(s) thereby performing parallel processing of the dataset,
**characterized in that** the method further comprises the steps of:
- a further worker requesting access to the dataset,
- identifying the largest chunk among the chunk(s) assigned to the worker(s) already processing data records of the dataset, and requesting the worker having the identified chunk assigned to it to split the chunk,
- said worker selecting a split point, using an iterative process,
- said worker splitting the identified chunk into two new chunks, at the selected split point, and assigning one of the new chunks to itself, and assigning the other of the new chunks to the further worker, and
- allowing the workers to process data records of the chunks assigned to them, the workers thereby performing parallel processing of the dataset.

2. The method according to claim 1, wherein the step of identifying the largest chunk comprises assigning a numeric weight value to each chunk and identifying the chunk having highest assigned numeric weight as the largest chunk.

3. The method according to claim 1 or 2, wherein the step of selecting a split point is performed using a binary search method.

4. The method according to any of the preceding claims, wherein the step of selecting a split point comprises the steps of:
- defining a left boundary, k_{left}, of the chunk as the key of the first data record of the chunk,
- defining a right boundary, k_{right}, of the chunk as the key of the last data record of the chunk,
- finding a first split point candidate, s₁, of the chunk as the median between the left boundary, k_{left}, and the right boundary, k_{right},
- identifying a current position of the worker having the chunk assigned to it, as a data record which is about to be processed by the worker,
- comparing the current position to the first split point candidate, s₁, and
- selecting a split point on the basis of the comparing step.

5. The method of claim 4, further comprising the steps of:
- in the case that the current position is less than the first split point candidate, s₁, finding a first check position, c₁, of the chunk as the median between the left boundary, k_{left}, and the first split point candidate, s₁,
- comparing the current position to the first check position, c₁, and
- in the case that the current position is less than the first check position, c₁, selecting the first split point candidate, s₁, as a split point, and splitting the chunk at the selected split point.

6. The method of claim 5, further comprising the steps of:
- in the case that the current position is greater than or equal to the first check position, c₁, finding a second split point candidate, s₂, of the chunk as the median between the first split point candidate, s₁, and the right boundary, k_{right}, and
- selecting the second split point candidate, s₂, as the split point, and splitting the chunk at the selected split point.

7. The method according to claim 4, further comprising the steps of:
- in the case that the current position is greater than or equal to the first split point candidate, s₁, finding a second split point candidate, s₂, of the chunk as the median between the first split point candidate, s₁, and the right boundary, k_{right}, and
- comparing the current position to the second split point candidate, s₂.

8. The method according to claim 7, further comprising the steps of:
- in the case that the current position is less than the second split point candidate, s₂, finding a second check position, c₂, of the chunk as the median between the first split point candidate, s₁, and the second split point candidate, s₂,
- comparing the current position to the second check position, c₂, and
- in the case that the current position is less than the second check position, c₂, selecting the second split point candidate, s₂, as the split point, and splitting the chunk at the selected split point.

9. The method according to claim 8, further comprising the steps of:
- in the case that the current position is greater than or equal to the second check position, c₂, finding a third split point candidate, s₃, as the median between the second split point candidate, s₂, and the right boundary, k_{right}, and
- selecting the third split point candidate, s₃, as the split point, and splitting the chunk at the selected split point.

10. The method according to claim 7, further comprising the steps of:
- in the case that the current position is greater than or equal to the second split point candidate, s₂, continuing to find further split point candidates as the median between the latest split point candidate and the right boundary, k_{right}, until a suitable split point candidate has been identified, and
- selecting the identified suitable split point candidate as the split point, and splitting the chunk at the selected split point.

11. The method according to any of the preceding claims, wherein the step of selecting a split point comprises the steps of:
- defining a left boundary, k_{left}, of the chunk as the key of the first data record of the chunk, and identifying k_{left} as an initial split point candidate, s₀,
- defining a right boundary, k_{right}, of the chunk as the key of the last data record of the chunk,
- identifying a current position of the worker having the chunk assigned to it, as the data record which is about to be processed by the worker,
- iteratively performing the steps of:
- finding a new split point candidate, sᵢ, as the median between the current split point candidate, sᵢ₋₁, and the right boundary, k_{right},
- comparing the current position to the new split point candidate, sᵢ, and
- use the new split point candidate, sᵢ, as the current split point candidate on the next iteration,
- until the current split point candidate, sᵢ, is greater than the current position.

12. The method according to claim 11, further comprising the steps of:
- when the current split point candidate, sᵢ, is greater than the current position, finding a check position, cᵢ, as the median between the previous split point candidate, sᵢ₋₁, and the current split point candidate, sᵢ,
- comparing the current position to the check position, cᵢ,
- in the case that the check position, cᵢ, is greater than or equal to the current position, selecting the current split point candidate, sᵢ, as the split point,
- in the case that the check position, cᵢ, is less than the current position, finding a new split point candidate, sᵢ₊₁, as the median between the current split point candidate, sᵢ, and the right boundary, k_{right}, and selecting the new split point candidate, sᵢ₊₁, as the split point.

13. The method according to any of the preceding claims, wherein the step of splitting the identified chunk comprises the steps of:
- creating a first new chunk from a left boundary, k_{left}, of the identified chunk to the selected split point, the left boundary, k_{left}, being the key of the first data record of the identified chunk, and
- creating a second new chunk from the selected split point to a right boundary, k_{right}, of the identified chunk, the right boundary, k_{right}, being the key of the last data record of the identified chunk,
wherein the first new chunk is assigned to the worker having the identified chunk assigned to it, and the second new chunk is assigned to the further worker.

14. The method according to any of the preceding claims, further comprising the steps of:
- estimating the sizes of the new chunks, and
- refraining from splitting the chunk if the size of at least one of the new chunks is smaller than a predefined threshold value.

15. The method according to any of the preceding claims, further comprising the step of defining a mapping between keys of the data records and numerical values, and wherein the step of selecting a split point comprises the steps of:
- defining a left boundary, k_{left}, of the chunk as the key of the first data record of the chunk, defining a right boundary, k_{right}, of the chunk as the key of the last data record of the chunk, and identifying a current position, k_{current}, of the worker having the identified chunk assigned to it, as a data record which is about to be processed by the worker,
- defining numerical values, N_{left}, N_{right}, and N_{current}, corresponding to the left boundary, k_{left}, the right boundary, k_{right}, and the current position, k_{current}, respectively, using the mapping between keys of the data records and numerical values,
- performing a binary search, using said numerical values, thereby finding a split point, s, which is substantially equally distant from N_{current} and N_{right}
- defining a split key, kₛₚₗᵢₜ, corresponding to the split point, s, using the reverse of the mapping between keys of the data records and numerical values.

16. A system for distributing processing of a dataset among two or more workers, the system comprising:
- a database containing the dataset to be processed, said dataset comprising a number of data records, each data record having a unique key, the keys being represented as integer numbers, the data records being arranged in the order of increasing or decreasing key values,
**characterized in that** the system further comprises:
- two or more workers, each worker being capable of processing data records of the dataset assigned to it, and
- a synchronization channel allowing processing by the workers to be synchronized, including allowing the workers to coordinate the processing of the data records of the dataset and distribute chunks of data records among them,
and **in that** the system is configured to perform the method according to any of the preceding claims.

17. The system according to claim 16, wherein the synchronization channel comprises a shared memory structure.

18. The system according to claim 16 or 17, wherein the synchronization channel comprises a synchronization database.

19. The system according to any of claims 16-18, wherein the synchronization channel comprises one or more network connections between the workers.

## Patentansprüche

1. Verfahren zum Verteilen der Verarbeitung eines Datensatzes zwischen zwei oder mehr Arbeitern, wobei der Datensatz eine Anzahl von Datenzeilen umfasst, und jede Datenzeile einen eindeutigen Schlüssel aufweist, wobei die Schlüssel als ganze Zahlen dargestellt sind und die Datenzeilen in der Reihenfolge zunehmender oder abnehmender Schlüsselwerte angeordnet sind, das Verfahren umfassend die Schritte:
- Aufteilen des Datensatzes in einen oder mehrere fortlaufende Chunks, wobei jeder Chunk mehrere Datenzeilen umfasst, und Zuweisen jedes Chunks des Datensatzes zu einem Arbeiter, und Erlauben, das jeder der Arbeiter die Datenzeilen des ihm zugewiesenen Chunks verarbeitet, wobei der/die Arbeiter dadurch eine parallele Verarbeitung des Datensatzes ausführen,
**dadurch gekennzeichnet, dass** das Verfahren ferner die Schritte umfasst:
- Anfordern von Zugriff auf den Datensatz durch einen weiteren Arbeiter,
- Identifizieren des größten Chunks unter dem/den Chunk(s), der/die dem/den Arbeiter/n zugewiesen sind, der/die bereits Datenzeilen des Datensatzes verarbeitet/verarbeiten, und Anfordern, dass der identifizierte Chunk dem Arbeiter zugewiesen wird, um den Chunk aufzuteilen,
- Wählen eines Teilungspunkts durch den Arbeiter unter Verwendung eines iterativen Prozesses,
- Teilen des identifizierten Chunk durch den Arbeiter an dem gewählten Teilungspunkt in zwei neue Chunks, und Zuweisen eines der neuen Chunks durch den Arbeiter zu sich selbst, und Zuweisen des anderen der neuen Chunks zu dem weiteren Arbeiter, und
- Erlauben, dass die Arbeiter Datenzeilen der ihnen zugewiesenen Chunks verarbeiten, womit die Arbeiter eine Parallelverarbeitung des Datensatzes ausführen.

2. Verfahren nach Anspruch 1, wobei der Schritt des Identifizierens des größten Chunks das Zuweisen eines numerischen Gewichtungswerts zu jedem Chunk und das Identifizieren des Chunks mit der höchsten zugewiesenen numerischen Gewichtung als den größten Chunk umfasst.

3. Verfahren nach Anspruch 1 oder 2, wobei der Schritt des Wählens eines Teilungspunkts unter Verwendung eines binären Suchverfahrens ausgeführt wird.

4. Verfahren nach einem der vorhergehenden Ansprüche, wobei der Schritt des Wählens eines Teilungspunkts die Schritte umfasst:
- Definieren einer linken Grenze, kₗᵢₙₖₛ, des Chunks als Schlüssel der ersten Datenzeile des Chunks,
- Definieren einer rechten Grenze, k_{rechts}, des Chunks als Schlüssel der letzten Datenzeile des Chunks,
- Finden eines ersten Teilungspunktkandidaten, s₁, des Chunks als die Mitte zwischen der linken Grenze, kₗᵢₙₖₛ, und der rechten Grenze, k_{rechts},
- Identifizieren einer aktuellen Position des Arbeiters, dem der Chunk zugewiesen ist, als eine Datenzeile, die durch den Arbeiter verarbeitet werden soll,
- Vergleichen der aktuellen Position mit dem ersten Teilungspunktkandidaten, s₁, und
- Wählen eines Teilungspunkts auf Grundlage des Vergleichsschritts.

5. Verfahren nach Anspruch 4, ferner umfassend die Schritte:
- Finden einer ersten Prüfposition, c₁, des Chunks als die Mitte zwischen der linken Grenze, kₗᵢₙₖₛ und dem ersten Teilungspunktkandidaten, s₁, falls die aktuelle Position kleiner als der erste Teilungspunktkandidat, s₁, ist,
- Vergleichen der aktuellen Position mit der ersten Prüfposition, c₁ und
- Wählen des ersten Teilungspunktkandidaten, s₁, als Teilungspunkt und Teilen des Chunks an dem gewählten Teilungspunkt, falls die aktuelle Position kleiner als die erste Prüfposition, c₁, ist.

6. Verfahren nach Anspruch 5, ferner umfassend die Schritte:
- Finden eines zweiten Teilungspunktkandidaten, s₂, des Chunks als die Mitte zwischen dem ersten Teilungspunktkandidaten, s₁, und der rechten Grenze, k_{rechts}, falls die aktuelle Position größer als oder gleich wie die erste Prüfposition, c₁, ist, und
- Wählen des zweiten Teilungspunktkandidaten, s₂, als den Teilungspunkt und Teilen des Chunks an dem gewählten Teilungspunkt.

7. Verfahren nach Anspruch 4, ferner umfassend die Schritte:
- Finden eines zweiten Teilungspunktkandidaten, s₂, des Chunks als die Mitte zwischen dem ersten Teilungspunktkandidaten, s₁, und der rechten Grenze, k_{rechts}, falls die aktuelle Position größer als oder gleich wie der erste Teilungspunktkandidat, s₁, ist, und
- Vergleichen der aktuellen Position mit dem zweiten Teilungspunktkandidaten, s₂.

8. Verfahren nach Anspruch 7, ferner umfassend die Schritte:
- Finden einer zweiten Prüfposition, c₂, des Chunks als die Mitte zwischen dem ersten Teilungspunktkandidaten, s₁, und dem zweiten Teilungspunktkandidaten, s₂, falls die aktuelle Position kleiner als der zweite Teilungspunktkandidat ist, s₂,
- Vergleichen der aktuellen Position mit der zweiten Prüfposition, c₂ und
- Wählen des zweiten Teilungspunktkandidaten, s₂, als den Teilungspunkt und Teilen des Chunks an dem gewählten Teilungspunkt, falls die aktuelle Position kleiner als die zweite Prüfposition, c₂, ist.

9. Verfahren nach Anspruch 8, ferner umfassend die Schritte:
- Finden eines dritten Teilungspunktkandidaten, s₃, als die Mitte zwischen dem zweiten Teilungspunktkandidaten, s₂, und der rechten Grenze, k_{rechts}, falls die aktuelle Position größer als oder gleich wie die zweite Prüfposition c₂, ist, und
- Wählen des dritten Teilungspunktkandidaten, s₃, als den Teilungspunkt und Teilen des Chunks an dem gewählten Teilungspunkt.

10. Verfahren nach Anspruch 7, ferner umfassend die Schritte:
- Fortfahren, weitere Teilungspunktkandidaten als die Mitte zwischen dem neuesten Teilungspunktkandidaten und der rechten Grenze, k_{rechts} zu finden, bis ein geeigneter Teilungspunktkandidat identifiziert wurde, falls die aktuelle Position größer als oder gleich wie der zweite Teilungspunktkandidat, s₂, ist, und
- Wählen des identifizierten geeigneten Teilungspunktkandidaten als den Teilungspunkt und Teilen des Chunks an dem gewählten Teilungspunkt.

11. Verfahren nach einem der vorhergehenden Ansprüche, wobei der Schritt des Wählens eines Teilungspunkts die Schritte umfasst:
- Definieren einer linken Grenze, kₗᵢₙₖₛ, des Chunks als Schlüssel der ersten Datenzeile des Chunks, und Identifizieren von kₗᵢₙₖₛ als einen ersten Teilungspunktkandidaten, s₀,
- Definieren einer rechten Grenze, k_{rechts}, des Chunks als Schlüssel der letzten Datenzeile des Chunks,
- Identifizieren einer aktuellen Position des Arbeiters, dem der Chunk zugewiesen ist, als die Datenzeile, die durch den Arbeiter verarbeitet werden soll,
- iteratives Ausführen der Schritte:
- Finden eines neuen Teilungspunktkandidaten, sᵢ, als die Mitte zwischen dem aktuellen Teilungspunktkandidaten, sᵢ₋₁, und der rechten Grenze, k_{rechts},
- Vergleichen der aktuellen Position mit dem neuen Teilungspunktkandidaten, sᵢ, und
- Verwenden des neuen Teilungspunktkandidaten, sᵢ, als den aktuellen Teilungspunktkandidaten in der nächsten Iteration,
- bis der aktuelle Teilungspunktkandidat, sᵢ, größer als die aktuelle Position ist.

12. Verfahren nach Anspruch 11, ferner umfassend die Schritte:
- Finden einer Prüfposition, cᵢ, als die Mitte zwischen dem vorherigen Teilungspunktkandidaten, sᵢ₋₁, und dem aktuellen Teilungspunktkandidaten, sᵢ, wenn der aktuelle Teilungspunktkandidat, sᵢ, größer als die aktuelle Position ist,
- Vergleichen der aktuellen Position mit der Prüfposition, c₁,
- Wählen des aktuellen Teilungspunktkandidaten, sᵢ, als den Teilungspunkt, falls die Prüfposition, cᵢ, größer als oder gleich wie die aktuelle Position ist,
- Finden eines neuen Teilungspunktkandidaten, sᵢ₊₁, als die Mitte zwischen dem aktuellen Teilungspunktkandidaten, sᵢ, und der rechten Grenze, k_{rechts}, und Wählen des neuen Teilungspunktkandidaten, sᵢ₊₁, als den Teilungspunkt, falls die Prüfposition, cᵢ, kleiner ist als die aktuelle Position ist.

13. Verfahren nach einem der vorhergehenden Ansprüche, wobei der Schritt des Teilens des identifizierten Chunks die Schritte umfasst:
- Erstellen eines ersten neuen Chunks von einer linken Grenze, kₗᵢₙₖₛ, des identifizierten Chunks für den gewählten Teilungspunkt, wobei die linke Grenze, kₗᵢₙₖₛ, der Schlüssel der ersten Datenzeile des identifizierten Chunks ist, und
- Erstellen eines zweiten neuen Chunks von dem gewählten Teilungspunkt zu einer rechten Grenze, k_{rechts}, des identifizierten Chunks, wobei die rechte Grenze, k_{rechts}, der Schlüssel der letzten Datenzeile des identifizierten Chunks ist,
wobei der erste neue Chunk dem Arbeiter zugewiesen ist, dem der identifizierte Chunk zugewiesen ist, und der zweite neue Chunk dem weiteren Arbeiter zugewiesen ist.

14. Verfahren nach einem der vorhergehenden Ansprüche, ferner umfassend die Schritte:
- Schätzen der Größen der neuen Chunks, und
- Nichtdurchführen des Teilens des Chunks, wenn die Größe von mindestens einem der neuen Chunks kleiner als ein vorgegebener Grenzwert ist.

15. Verfahren nach einem der vorhergehenden Ansprüche, ferner umfassend die Schritte des Definierens einer Zuordnung zwischen Schlüsseln der Datenzeilen und numerischen Werte, und wobei der Schritt des Wählens eines Teilungspunkts die Schritte umfasst:
- Definieren einer linken Grenze, kₗᵢₙₖₛ, des Chunks als Schlüssel der ersten Datenzeile des Chunks, Definieren einer rechten Grenze, k_{rechts}, des Chunks als Schlüssel der letzten Datenzeile des Chunks, und Identifizieren einer aktuellen Position, kₐₖₜᵤₑₗₗ, des Arbeiters, dem der identifizierte Chunk zugewiesen ist, als einen Datensatz, der durch den Arbeiter verarbeitet werden soll,
- Definieren von numerischen Werten, Nₗᵢₙₖₛ, N_{rechts} und Nₐₖₜᵤₑₗₗ, die der linken Grenze, kₗᵢₙₖₛ, der rechten Grenze, k_{rechts}, bzw. der aktuellen Position, kₐₖₜᵤₑₗₗ, entsprechen, unter Verwendung der Zuordnung zwischen Schlüsseln der Datenzeilen und numerischen Werte,
- Durchführen einer binären Suche unter Verwendung der numerischen Werte, wodurch ein Teilungspunkt, s, gefunden wird, der im Wesentlichen die gleiche Entfernung von Nₐₖₜᵤₑₗₗ und Nrechts aufweist,
- Definieren eines Teilungsschlüssels, k_{Teilung}, der dem Teilungspunkt, s, entspricht, unter Verwendung der Umkehrung der Zuordnung zwischen Schlüsseln der Datenzeilen und numerischen Werte.

16. System zum Verteilen der Verarbeitung eines Datensatzes zwischen zwei oder mehr Arbeitern, das System umfassend:
- eine Datenbank, die den Datensatz umfasst, der verarbeitet werden soll, wobei der Datensatz eine Anzahl von Datenzeilen umfasst, und jede Datenzeile einen eindeutigen Schlüssel aufweist, wobei die Schlüssel als ganze Zahlen dargestellt sind und die Datenzeilen in der Reihenfolge zunehmender oder abnehmender Schlüsselwerte angeordnet sind, **dadurch gekennzeichnet, dass** das System ferner umfasst:
- zwei oder mehr Arbeiter, wobei jeder Arbeiter in der Lage ist, Datenzeilen des ihm zugewiesenen Datensatzes zu verarbeiten, und
- einen Synchronisierungskanal, der das Synchronisieren der Verarbeitung durch die Arbeiter erlaubt, einschließlich des Erlaubens, dass die Arbeiter die Verarbeitung der Datenzeilen des Datensatzes koordinieren und Chunks der Datenzeilen unter sich aufteilen,
und dadurch, dass das System konfiguriert ist, das Verfahren nach einem der vorhergehenden Ansprüche auszuführen.

17. System nach Anspruch 16, wobei der Synchronisierungskanal eine geteilte Speicherstruktur umfasst.

18. System nach Anspruch 16 oder 17, wobei der Synchronisierungskanal eine Synchronisierungsdatenbank umfasst.

19. System nach einem der Ansprüche 16 bis 18, wobei der Synchronisierungskanal eine oder mehrere Netzwerkverbindungen zwischen den Arbeitern umfasst.

## Revendications

1. Procédé de distribution du traitement d'un ensemble de données parmi deux opérateurs ou plus, ledit ensemble de données comprenant un certain nombre d'enregistrements de données, chaque enregistrement de données ayant une clé unique, les clés étant représentées sous forme de nombres entiers, les enregistrements de données étant disposés dans l'ordre de valeurs de clé croissantes ou décroissantes, ce procédé comprenant les étapes suivantes :
- fractionnement de l'ensemble de données en un ou plusieurs fragments continus, chaque fragment comprenant une pluralité d'enregistrements de données, et affectant chaque fragment de l'ensemble de données à un opérateur, et autorisant chacun des opérateurs à traiter les enregistrements de données du fragment qui lui est affecté, le ou les opérateurs réalisant ainsi un traitement parallèle de l'ensemble de données,
**caractérisé en ce que** ce procédé comprend en outre les étapes suivantes :
- un autre opérateur demande l'accès à l'ensemble de données,
- l'identification du fragment le plus important parmi le ou les fragments affectés à l'opérateur ou aux opérateurs traitant déjà des enregistrements de données de l'ensemble de données, et la demande aux opérateurs ayant le fragment identifié qui leur est affecté de fractionner le fragment,
- ledit opérateur sélectionnant un point de fractionnement en utilisant un processus itératif,
- ledit opérateur fractionnant le fragment identifié en deux nouveaux fragments au point de fractionnement sélectionné, et affectant l'un des nouveaux fragments à lui-même, et affectant l'autre des nouveaux fragments à l'autre opérateur, et
- l'autorisation donnée aux opérateurs de traiter les enregistrements de données des fragments qui leur sont affectés, les opérateurs réalisant ainsi un traitement parallèle de l'ensemble de données.

2. Procédé selon la revendication 1, dans lequel l'étape d'identification du plus gros fragment comprend l'affectation d'une valeur pondérale numérique à chaque fragment et l'identification du fragment ayant le plus gros poids numérique affecté comme fragment le plus gros.

3. Procédé selon la revendication 1 ou 2, dans lequel l'étape de sélection d'un point de fractionnement est réalisée en utilisant une méthode de recherche binaire.

4. Procédé selon l'une quelconque des revendications précédentes, dans lequel l'étape de sélection d'un point de fractionnement comprend les étapes suivantes :
- définition d'une limite gauche k_{gauche} du fragment comme clé du premier enregistrement de données du fragment,
- définition d'une limite droite k_{droite} du fragment comme clé du dernier enregistrement de données du fragment,
- détection d'un premier candidat point de fractionnement s₁ du fragment comme médiane entre la limite gauche k_{gauche} et la limite droite k_{droite},
- identification d'une position actuelle de l'opérateur ayant le fragment qui lui est assigné comme enregistrement de données sur le point d'être traité par l'opérateur,
- comparaison de la position actuelle avec le premier candidat point de fractionnement s₁, et
- sélection d'un point de fractionnement sur la base de l'étape comparative.

5. Procédé selon la revendication 4, comprenant en outre les étapes suivantes :
- dans le cas où la position actuelle est inférieure au premier candidat point de fractionnement s₁, détection d'une première position de contrôle c₁ du fragment comme médiane entre la limite gauche k_{gauche} et le premier candidat point de fractionnement s₁,
- comparaison de la position actuelle avec la première position de contrôle c₁, et
- dans le cas où la position actuelle est inférieure à la première position de contrôle c₁, sélection du premier candidat point de fractionnement s₁ comme point de fractionnement, et fractionnement du fragment au point de fractionnement sélectionné.

6. Procédé selon la revendication 5, comprenant en outre les étapes suivantes :
- dans le cas où la position actuelle est supérieure ou égale à la première position de contrôle c₁, détection d'un deuxième candidat point de fractionnement s₂ du fragment comme médiane entre le premier candidat point de fractionnement s₁ et la limite droite k_{droite}, et
- sélection du deuxième candidat point de fractionnement s₂ comme point de fractionnement et fractionnement du fragment au point de fractionnement sélectionné.

7. Procédé selon la revendication 4, comprenant en outre les étapes suivantes :
- dans le cas où la position actuelle est supérieure ou égale au premier candidat point de fractionnement s₁, détection d'un deuxième candidat point de fractionnement s₂ du fragment comme médiane entre le premier candidat point de fractionnement s₁ et la limite droite k_{droite}, et
- comparaison de la position actuelle avec le deuxième candidat point de fractionnement s₂.

8. Procédé selon la revendication 7, comprenant en outre les étapes suivantes :
- dans le cas où la position actuelle est inférieure au deuxième candidat point de fractionnement s₂, détection d'une seconde position de contrôle c₂ du fragment comme médiane entre le premier candidat point de fractionnement s₁ et le deuxième candidat point de fractionnement s₂,
- comparaison de la position actuelle avec la seconde position de contrôle c₂, et
- dans le cas où la position actuelle est inférieure à la seconde position de contrôle c₂, sélection du deuxième candidat point de fractionnement s₂ comme second point de fractionnement, et fractionnement du fragment au point de fractionnement sélectionné.

9. Procédé selon la revendication 8, comprenant en outre les étapes suivantes :
- dans le cas où la position actuelle est supérieure ou égale à la seconde position de contrôle c₂, détermination d'un troisième candidat point de fractionnement s₃ comme médiane entre le deuxième candidat point de fractionnement s₂ et la limite droite k_{droite}, et
- sélection du troisième candidat point de fractionnement s₃ comme point de fractionnement, et fractionnement du fragment au point de fractionnement sélectionné.

10. Procédé selon la revendication 7, comprenant en outre les étapes suivantes :
- dans le cas où la position actuelle est supérieure ou égale au deuxième candidat point de fractionnement s₂, poursuite de la recherche d'autres candidats points de fractionnement comme médiane entre le tout dernier candidat point de fractionnement et poursuite de la détection de candidats points de fractionnement comme médiane entre le tout dernier candidat point de fonctionnement et la limite droite k_{droite} jusqu'à ce qu'un candidat point de fractionnement adéquat ait été identifié, et
- sélection du candidat point de fractionnement adéquat identifié comme point de fractionnement, et fractionnement du fragment au point de fractionnement sélectionné.

11. Procédé selon l'une quelconque des revendications précédentes, dans lequel l'étape de sélection d'un point de fractionnement comprend les étapes suivantes :
- définition d'une limite gauche k_{gauche} du fragment comme clé du premier enregistrement de données du fragment, et identification de k_{gauche} comme candidat point de fractionnement initial s₀,
- définition d'une limite droite k_{droite} du fragment comme clé du dernier enregistrement de données du fragment,
- identification d'une position actuelle de l'opérateur ayant le fragment qui lui est affecté comme enregistrement de données qui est sur le point d'être traité par l'opérateur,
- réalisation itérative des étapes suivantes :
- détection d'un nouveau candidat point de fractionnement sᵢr comme médiane entre le candidat point de fractionnement actuel sᵢ₋₁ et la limite droite k_{droite},
- comparaison de la position actuelle avec le nouveau candidat point de fractionnement sᵢr, et
- utilisation du nouveau candidat point de fractionnement sᵢr comme candidat point de fractionnement actuel sur l'itération suivante,
- jusqu'au candidat point de fractionnement actuel, sᵢr est supérieur à la position actuelle.

12. Procédé selon la revendication 11, comprenant en outre les étapes suivantes :
- lorsque le candidat point de fractionnement actuel sᵢr est supérieur à la position actuelle, détection d'une position de contrôle cᵢr comme médiane entre le précédent candidat point de fractionnement sᵢ₋₁ et le candidat point de fractionnement actuel sᵢr,
- comparaison de la position actuelle avec la position de contrôle cᵢr,
- dans le cas où la position de contrôle cᵢr est supérieure ou égale à la position actuelle, sélection du candidat point de fonctionnement actuel sᵢr comme point de fractionnement,
- dans le cas où la position de contrôle cᵢr est inférieure à la position actuelle, détection d'un nouveau candidat point de fractionnement sᵢ₊₁ comme médiane entre le candidat point de fractionnement actuel sᵢr et la limite droite k_{droite}, et sélection du nouveau candidat point de fractionnement sᵢ₊₁ comme point de fractionnement.

13. Procédé selon l'une quelconque des revendications précédentes, dans lequel l'étape de fractionnement du fragment identifié comprend les étapes suivantes :
- création d'un premier nouveau fragment à partir d'une limite gauche k_{gauche} du fragment identifié jusqu'au point de fractionnement sélectionné, la limite gauche k_{gauche} étant la clé du premier enregistrement de données du fragment identifié, et
- création d'un second nouveau fragment à partir du point de fractionnement sélectionné jusqu'à une limite droite k_{droite} du fragment identifié, la limite droite k_{droite} étant la clé du dernier enregistrement de données du fragment identifié,
le premier nouveau fragment étant affecté à l'opérateur ayant le fragment identifié qui lui est affecté, et le second nouveau fragment étant affecté à l'autre opérateur.

14. Procédé selon l'une quelconque des revendications précédentes, comprenant en outre les étapes suivantes :
- estimation des tailles des nouveaux fragments, et
- abstention de fractionnement du fragment si la taille d'au moins un des nouveaux fragments est inférieure à une valeur seuil prédéfinie.

15. Procédé selon l'une quelconque des revendications précédentes, comprenant en outre l'étape de définition d'une cartographie entre des clés des enregistrements de données et des valeurs numériques, l'étape de sélection d'un point de fractionnement comprenant les étapes suivantes :
- définition d'une limite gauche k_{gauche} comme la clé du premier enregistrement de données du fragment, définition d'une limite droite k_{droite} du fragment comme la clé du dernier enregistrement de données du fragment, et identification d'une position actuelle k_{actuel} de l'opérateur ayant le fragment identifié qui lui est affecté comme enregistrement de données qui est sur le point d'être traité par l'opérateur,
- définition de valeurs numériques N_{gauche}, N_{droite} et N_{actuel} correspondant respectivement à la limite gauche k_{gauche}, à la limite droite k_{droite}, et à la position actuelle k_{actuel}, en utilisant la cartographie entre les clés des enregistrements de données et les valeurs numériques,
- réalisation d'une recherche binaire, en utilisant lesdites valeurs numériques, en trouvant ainsi un point de fractionnement sr qui est sensiblement à égale distance de N_{actuel} et N_{droite},
- définition d'une clé de fractionnement kₛₚₗᵢₜ correspondant au point de fractionnement sr en utilisant l'inverse de la cartographie entre les clés des enregistrements de données et les valeurs numériques.

16. Système de distribution du traitement d'un ensemble de données parmi deux opérateurs ou plus, ce système comprenant :
- une base de données contenant l'ensemble de données à traiter, ledit ensemble de données comprenant un certain nombre d'enregistrements de données, chaque enregistrement de données ayant une clé unique, les clés étant représentées sous forme de nombres entiers, les enregistrements de données étant disposés dans l'autre de valeurs de clé croissantes ou décroissantes,
**caractérisé en ce que** ce système comprend en outre :
- deux opérateurs ou plus, chaque opérateur étant capable de traiter des enregistrements de données de l'ensemble de données qui lui est affecté, et
- un canal de synchronisation permettant le traitement par les opérateurs à synchroniser, incluant l'autorisation donnée aux opérateurs de coordonner le traitement des enregistrements de données de l'ensemble de données et de distribuer des fragments d'enregistrements de données parmi eux,
et **en ce que** le système est conçu pour réaliser le procédé selon l'une quelconque des revendications précédentes.

17. Système selon la revendication 16, dans lequel le canal de synchronisation comprend une structure à mémoire partagée.

18. Système selon la revendication 16 ou 17, dans lequel le canal de synchronisation comprend une base de données de synchronisation.

19. Système selon l'une quelconque des revendications 16 à 18, dans lequel le canal de synchronisation comprend une ou plusieurs connexions de réseau entre les opérateurs.
